Europäisches Patentamt

European Patent Office

Office européen des brevets

(19)

(11) Publication number: **0 050 237**
**A1**

(12)

# EUROPEAN PATENT APPLICATION

(21) Application number: 81107700.7

(22) Date of filing: 28.09.81

(51) Int. Cl.³: **F 24 J 3/02,** G 02 B 3/08

(30) Priority: 30.09.80 IT 2500980

(43) Date of publication of application: 28.04.82
Bulletin 82/17

(84) Designated Contracting States: BE CH DE FR LI NL

(71) Applicant: SOCIETA ITALIANA VETRO - SIV SpA,
I-66054 Vasto (Chieti) (IT)

(72) Inventor: Gliozzi, Giuseppe, Via S. Jacini, 68,
I-00191 Roma (IT)
Inventor: Sebastiano, Francesco, Via Corsica, 26,
I-86039 Termoli (Campobasso) (IT)
Inventor: D'Ettorre, Rolando, Via Pitagora, 5,
I-66054 Vasto (Chieti) (IT)

(74) Representative: Jarach, Angelalberto, Dr. Ing. et al, Ingg.
Guzzi, Ravizza & C. Via Broletto, 39, I-20121 Milano (IT)

(54) Plate for covering a concentrating solar collector.

(57) A plate of special refracting section, consisting of two flanked identical central flat-convex lenses, both being symmetrically provided at the sides with dioptric elements, can be used to advantage in a concentrating solar collector.

The section in accordance with the invention can be manufactured at low cost by means of a process used in figured glass production.

Furthermore, said section permits appreciable reduction in surface of the absorber lying underneath said section.

- 1 -

"PLATE OF SPECIAL REFRACTING SECTION FOR COVERING A CONCEN-
TRATING SOLAR COLLECTOR, WHICH CAN BE ECONOMICALLY MANUFAC-
TURED FROM GLASS BY CONTINUOUS PROCESS, AS WELL AS SOLAR
COLLECTOR PROVIDED WITH SUCH PLATE AND PROCESS FOR OBTAINING
THE LATTER"

Object of the present invention is to provide a plate or
structure made of glass which can be used in an advantageous
manner as cover for a solar collector.

A further object of the present invention is to provide a
type of concentrating solar collector especially favourable
for utilization of solar energy.

Lastly, a further object of the present invention is to provide a continuous manufacturing process for said glass struc
tures, wherein said glass structures can be manufactured at
particularly low costs with respect to technologies hitherto
employed.

Typical example of a structure usable as cover for a solar
collector which is very efficient in concentrating solar
energy even during the critical hours, is that incorporating
a section comprising a central element of "flat-convex lens"
type and side dioptric elements with respect to the lens axis, whose number and dimensions are such as to permit maximum collection of solar energy during the day.

When the dimensions are suitably calculated, these sections possess considerable concentrating power.

Said refracting sections are generally made of acrylic materials and are very costly owing to the difficulty in manufacturing them with the necessary accuracy. Hence their application is especially confined to the field of microfilm readers, photocopiers, viewers in general, telescopes, high speed photographic systems, laser systems.

A large scale application of structures or plates having such a section usable as covers for fixed solar collectors has not proved economically feasible up till now.

Object of the present invention is to provide a special section to the structure or plate which, besides finding favourable application as cover for solar collectors, can be manufactured at particularly low costs.

Normally, the main reasons for adopting powerfull concentrating solar collectors can - on the other hand - be summed up as follows:
1) the temperature of the heat transfer fluid is higher than that obtainable with a normal solar panel;
2) the heat dispersion area with respect to the collecting area is reduced, with consequent improvement of thermal performance;
3) owing to the reduction of the transistory elements, the rapidity with which the operating conditions are reached is increased because the thermal mass is normally very much less than that occurring with flat solar panels.

Limitations in generalized application of said concentrating systems can be ascribed to the following disadvantages:

1) high manufacturing costs of the concentrating elements;
2) sun tracking or follower systems must be used;
3) reliability of the flexible tubing conveying the heat transport fluid must guaranteed;
4) the good optical properties must be maintained over long periods of time, by limiting deterioration due to ambient effects (dusts, scratches, etc.). This can necessitate special attention during the design stage.

Object of the present invention is precisely that of providing a concentrating solar collector in which the aforesaid disadvantages are considerably reduced.

There is then the problem of finding an economic process for producing such plates or structures.

Processes and equipment for continuous glass strip manufacture are certainly already known. Also known are processes and equipment especially suitable for continuous manufacture of glass plate which can be impressed on one or both surfaces with designs and/or embossing of various types, commercially known as "figured glass".

More especially it is known how the layer of molten glass, on leaving the furnace, is conveyed along a pouring channel to the rolls of a rolling mill.

These rolls bear the negative designs which are then stamped on one or both surfaces of the glass plate still in the molten state.

After stamping the designs, the glass plate is then submitted to the subsequent annealing, cooling and cutting phases.

However, up till now it has not been possible, this being one of the objects of the present invention, to continuously produce by means of a known process refracting glass sections which can be used to advantage in concentrating solar collectors.

In order to utilize the process employed in the manufacture of figured glass, one of the two rolls in the rolling mill through which the molten glass layer passes must, in fact, be shaped so as to stamp the refracting section design on one of the two surfaces of said layer.

The main difficulties from the manufacturing point-of-view in obtaining such a section with the figured glass process, which have hitherto prevented its application, are as follows:
- forming of excessively deep furrows between the dioptric elements quite close together or even adjacent without impairing the feasibility of the actual section;
- reproduction of dioptric elements of higher power which, owing to their limited width, give rise to a profile being quite jagged in the outer parts of the lens;
- maximum permissible lens width: $\sim$ 600 mm.

Hybrid combinations of dioptric elements were then resorted to, which, by providing the required width, would exhibit satisfactory concentrating properties and acceptable behaviour towards the apparent rotation of the sun.

Hence the following different combinations were taken into consideration

1) sections consisting of more than one flat-convex lenses in the central part, which are further and symmetrically provided with dioptric elements in such a number as to take into account the limitation in width;

2) structures consisting of just one central element located between the dioptric elements with concentrating power inverse of their order.

Lastly the Applicant has devised a solution to solve the many complex difficulties in manufacture, which is simple enough but at the same time revolutionary, that of using a lens with two major axes as plate section. Several esperiments have been carried out, and after a careful evaluation of the results, it was found that it was possible to obtain a plate or structure able to satisfy the aforementioned requirements, by placing side-by-side two identical flat-convex lenses of already known type with side elements, each lens having a width of about 300 mm.

In this way, a flat lens is obtained having - as stated previously - two distinct major axes; hence this lens can also be defined as a biaxial lens.

This structure possesses cons.derable advantages with respect to conventional type structures, the most important being:

1) the consequent reduction in height of the dioptric elements which permits, for the first time, manufacture of the plate, in glass, using the already known process for figured glass production;

2) the particular optical behaviour of the plate, as it is based on a biaxial lens which permits _its adaption to_ _a type of solar collector featuring considerably reduced sur-_ _faces of the absorber._

The preferred geometry of the biaxial lens consists of two twin lenses coupled together, with overall width of $\sim$ 622 mm, and with two major axes spaceu at a distance of 311 mm.

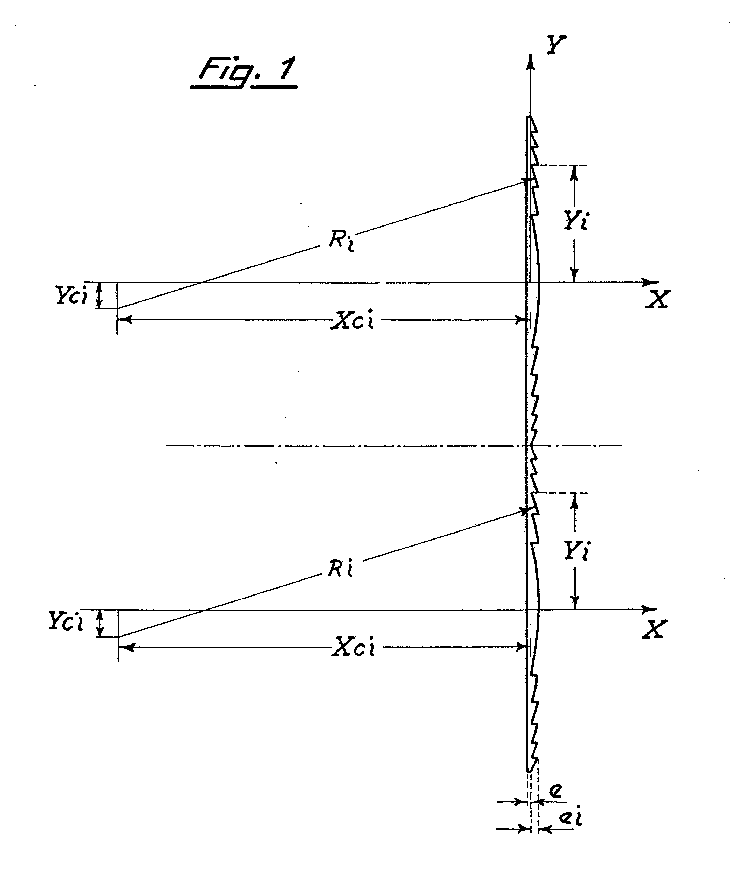

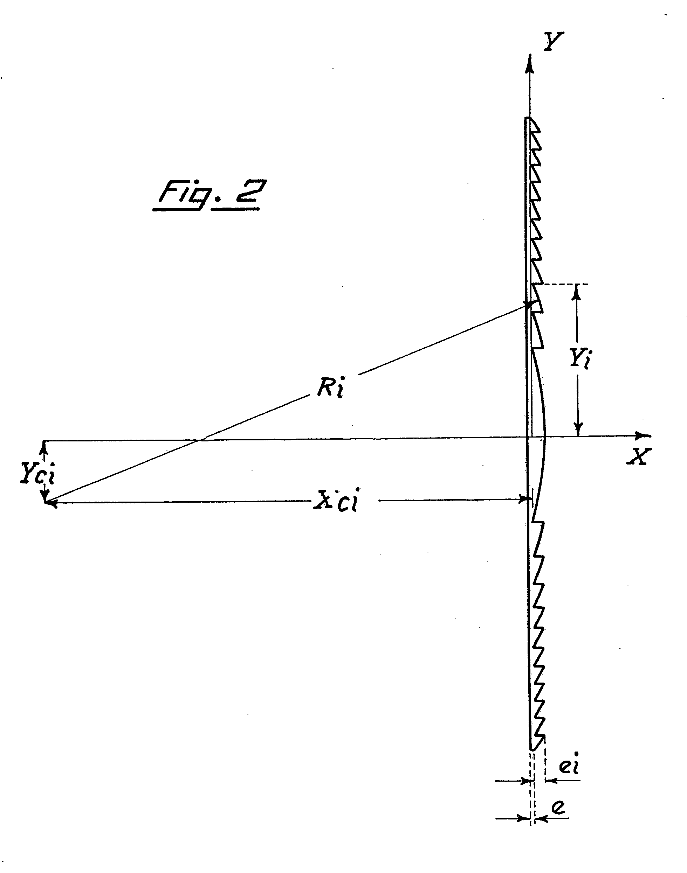

The above geometry is illustrated in fig. 1 of the accompanying drawings given as an exemplification of the principles of the invention without limitation – while fig. 2 illustrates a monaxial lens of already known type.

As can be seen in the drawing, the common thickness _ei_ of the dioptric elements is preferably $\sim$7 mm, while their minimum width is 14 mm.

Furthermore, thickness _e_ of the substrate common to the dioptric elements is preferably equal $\sim$4 mm.

In order to reveal the behaviour of the lens as illustrated in the fixed position, and more especially to evaluate its concentrating capability, calculations were made on the basis of a practical situation.

Hence the section was oriented in the East-West direction with the inlet plane of the rays lying normal to the sun's rays at 12 hour.

The latitude chosen was 42° North and the hourly path of the sun on the 22nd of June was taken into consideration.

A section, having for the sake of example, the following dimensions:

$e_i$ = 7 mm

e = 4 mm

L = 600 mm

was found to have a concentration ratio equal to about 1.6.

Therefore the optical behaviour of the section with biaxial lens in fig. 1 is such as to favour its use as cover plate for flat solar collectors. Of course, the biaxial lens could be used for different zones of latitude by suitably varying the dimensions of the section..

Various experiments were conducted in order to identify where, amongst the various planes parallel to the lens plane, there was less dispersion of the sun's rays in direction y of a clockwise arc ranging from 8 to 16.

Examination of the results showed that the plane with least dispersion for the biaxial lens was that lying at a distance d = 250 mm.

The travel of the concentrated sun's rays along the abscissa y totalled a length of 195 mm.

As the overall width of the half biaxial lens is equal to 311 mm, a concentration ratio along the y axis is obtained for each lens section which is:

C = 1.6

Bearing in mind that the lenses are kept in a fixed position and that the calculation was made in practical terms, the concentration ratios are more than satisfactory.

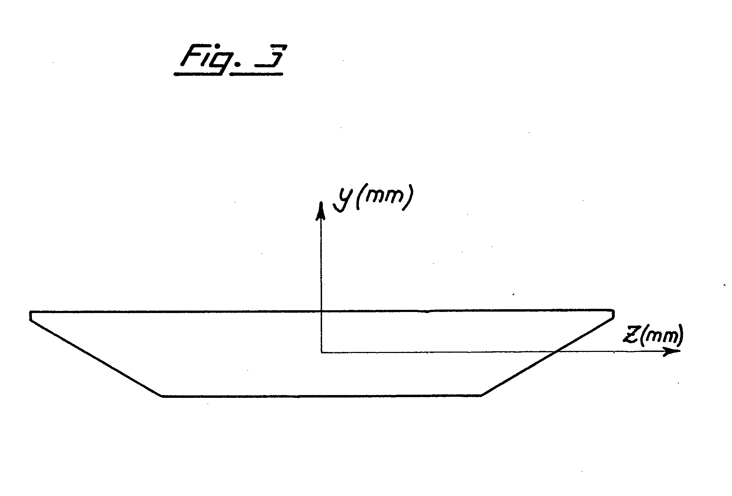

The use of glass sections thus means considerably advantages are to be gained in the solar collector field. They can be easily deduced from fig. 3 which gives the shape of the surface of the absorber whereupon the above described lens can act as a cover. Said figure gives the image on plane yz that the sun successively assumes from 8 to 12 hours on the plane of minimum dispersion lying at a distance d = 250 from the lens plane, (the images for the afternoon hours are obtained by symmetry with respect to the y axis).

When a concentrating solar collector uses the biaxial lens in accordance with the invention, it possesses the following advantages:

1) reduced dimensions of the absorber surface; in fact it is merely necessary to limit development of the collecting surface to that effectively struck by the luminous energy during the movement of the sun, with the solar image on the preselected plane really affecting a surface of almost trapezoidal shape (if an absorber with such geometry is used, the concentration ratio along direction y would also be varied to C = 1.98);

2) easy insulation of the absorber with consequent improvement of thermal performance of the solar collector;

3) an appreciable higher temperature of the fluid circulating in the solar collector can be obtained;

4) optimum thermal performance can be achieved without use of sun followers which would cause users the normal periodic maintenance problems;

5) the good optical properties of the systems can be

0050237

maintained for long periods of time by limiting deterioration due to ambient effects (dusts, scratches, etc.).

CLAIMS OF PATENT

1.  Plate usable as cover for a solar collector characterized in that said plate comprises a flat lens with two distinct major axes or biaxial lens.

2.  Plate as claimed in claim 1, characterized in that said plate comprises a section consisting of two identical flat-convex lenses with side dioptric elements, each one having a width of about 300 mm.

3.  Plate as claimed in claims 1 and 2, in which the width is preferibly ∿622 mm, and which comprises two major axes spaced at a distance of 311 mm, dioptric elements of saw tooth shape having a substrate of 4 mm, a thickness of ∿7 mm and wicth growing from 14 mm to about 30 mm, from the periphery up to the lens, hence the plate can be manufactured from glass by a continuous process - such as that used for manufacturing figured glass.

4.  Plate as claimed in claims 1 to 3, characterized in that said plate is made of glass and a concentration ratio of about 1.6 is guaranteed.

5.  Concentrating solar collector incorporating, as cover, a plate such as that claimed in claims 1 to 4, characterized in that its surface is designed to be struck by solar energy in a plane of minimum dispersion, that is to say at 250 mm from the biaxial lens plane.

6.  Concentrating solar collector as claimed in claim 5, wherein the surface designed to absorb the solar energy has an almost trapezoidal shape, on which the concentration ratio can rise to 1.98.

7.  Continuous manufacturing process for structures or plates having a section as claimed in any of the claims from 1 to 4, consisting of the already known process for figured glass manufacture wherein a pair of rolls of a rolling mill is used through which the glass in molten state is passed and is stamped prior to its removal, cooling and cutting, characterized in that one of said rolls stamps the section of the plate and is engraved with the negative design of the section.

8.  Glass plate usable as cover plate for the solar collector as herein described and illustrated in fig. 1 of the accompanying drawings.

9.  Concentrating solar collector with an absorbing of the shape as herein described and illustrated in fig. 3 of the accompanying drawings.

Fig. 1

0050237

1/3

_Fig. 2_

0050237

_Fig. 3_

| | DOCUMENTS CONSIDERED TO BE RELEVANT | | CLASSIFICATION OF THE APPLICATION (Int. Cl.) |
|---|---|---|---|
| Category | Citation of document with indication, where appropriate, of relevant passages | Relevant to claim | |
| | APPLIED OPTICS, vol. 19, no. 1, May 1, 1980 C.J.SLETTEN,F.S.HOLT,S.B.HERS-KOVITZ "Wide-angel lenses and image collapsing subreflectors for nontracking solar collectors" pages 1439-1453 <br> * Page 1439, column 1, line 1 - page 1442, column 2, line 42; page 1450, column 1, line 1 - column 2, line 43; fig. 1-4 * <br> -- | 1-3,5, 8 | F 24 J 3/02 <br> G 02 B 3/08 |
| A | DE - A1 - 2 757 155 (E-SYSTEMS) <br> * Page 15, line 19 - page 17, line 22; page 23, line 1 - page 26, line 15; page 13, lines 1-4; page 39, line 9 - page 40, line 3; fig. 1;8,9 * <br> & US-A-4 069 812 <br> -- | 1-5,7, 8 | TECHNICAL FIELDS SEARCHED (Int. Cl.³) <br><br> F 24 J <br> G 02 B <br> B 29 F |
| A | DE - A1 - 2 651 738 (ISOLIER-MATERIAL AG) <br> * Totality * <br> -- | 1-3 | |
| A | DE - A1 - 2 552 092 (NATIONAL AERONAUTICS AND SPACE ADMINISTRA-TION) <br> * Totality * <br> & US-A-3 915 148 <br> -- | 1-3 | CATEGORY OF CITED DOCUMENTS <br> X: particularly relevant <br> A: technological background <br> O: non-written disclosure <br> P: intermediate document |
| A | AT - B - 211 533 (GLAUCO PASQUETTI) <br> * Page 1, lines 24-41; fig. * <br> ---- | 7 | T: theory or principle underlying the invention <br> E: conflicting application <br> D: document cited in the application <br> L: citation for other reasons <br><br> &: member of the same patent family. corresponding document |

X    The present search report has been drawn up for all claims

| Place of search | Date of completion of the search | Examiner |
|---|---|---|
| VIENNA | 30-12-1981 | SCHMIDT |

EPO Form 1503.1   06.78